(19) Europäisches Patentamt
European Patent Office
Office européen des brevets

(11) **EP 3 425 621 A1**

(12) **EUROPEAN PATENT APPLICATION**

(43) Date of publication:
**09.01.2019 Bulletin 2019/02**

(51) Int Cl.:
***G09G 3/20*** (2006.01)

(21) Application number: **18178821.7**

(22) Date of filing: **20.06.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2017 EP 17305871**

(71) Applicant: **THOMSON LICENSING
92130 Issy les Moulineaux (FR)**

(72) Inventors:
• **HELLIER, Pierre
35576 Cesson-Sévigné Cedex (FR)**
• **MARQUANT, Gwenaelle
35576 Cesson-Sévigné Cedex (FR)**
• **CHAMARET, Christel
35576 Cesson-Sévigné Cedex (FR)**

(74) Representative: **Huchet, Anne et al
InterDigital CE Patent Holdings
20, rue Rouget de Lisle
92130 Issy-les-Moulineaux (FR)**

(54) **METHOD AND DEVICE FOR ADAPTING A DISPLAY VISIBILITY**

(57) In a context of varying ambient luminosity, a salient idea is to adjust an image by adapting the contrast of an image according to a level of ambient light. Enhancing the contrast is known to make a displayed object more distinguishable, with some impact on the overall image quality. Increasing a level of contrast enhancement as the ambient light increases advantageously allows to preserve distinguishable displayed objects in high levels of ambient lights, despite an overall loss of quality, less perceivable in high levels of ambient light.

S10 — Measuring a level of ambient luminosity

S12 — Adjusting the image by adapting the contrast of the image according to the level of ambient luminosity

S14 — Providing the adjusted image for display

Figure 1

**Description**

1. TECHNICAL FIELD

The present disclosure relates to the domain of image display in varying viewing conditions.

2. BACKGROUND ART

Visible display of images is challenging in bright conditions, as for example in a sunny weather outdoor environment. Some known methods propose to increase the luminance of display screens to improve the visibility of a displayed image under very bright conditions. Although these techniques improve the visibility of high quality images, they do not necessarily perform well for lower quality images. In case images comprise for example noise or blurred areas, increasing the luminance however does not improve the overall visibility of the image. There is a need for new methods for improving a visibility of a wider range of images in varying illuminating conditions.

3. SUMMARY

In a context of varying ambient luminosity, a salient idea is to adjust an image by adapting the contrast of an image according to a level of ambient light. Enhancing the contrast is known to make a displayed object more distinguishable, with some impact on the overall image quality. Increasing a level of contrast enhancement as the ambient light increases advantageously allows to preserve distinguishable displayed objects in high levels of ambient lights, despite an overall loss of quality, less perceivable in high levels of ambient light.

To that end a method for adapting a display visibility of an image is disclosed. The method comprises:

- measuring a level of ambient luminosity;
- modifying a low frequency portion of a signal representing the image by applying a transfer function to the low frequency portion; the transfer function depending on the level of ambient luminosity
- adjusting the image by combining the modified low frequency portion of the signal with a high frequency portion of the signal;
- adapting the display visibility of the image by providing the adjusted image for display on a display device.

According to a variant, the the image adjustment is performed or not performed as a function of the level of ambient luminosity.

According to another variant, a signal representing the image is separated into a high frequency portion and a low frequency portion, and adjusting the image comprises modifying the low frequency portion of the signal representing the image by applying a transfer function to the low frequency portion, the transfer function depending on the level of ambient luminosity, the modified low frequency portion being further combined with the high frequency portion of the signal representing the image before being provided for display.

According to another variant, the high frequency portion is amplified with a coefficient depending on the level of ambient luminosity, prior to be combined with the modified low frequency portion.

According to another variant, a parameter of the transfer function, obtained by a first function increasing with the level of ambient luminosity.

According to another variant, the coefficient is obtained by a second function increasing with the level of ambient luminosity.

According to another variant, the coefficient is obtained by a fourth function decreasing with a perceived contrast level, the perceived contrast level representing a combination of a contrast level of the image and the level of ambient luminosity.

According to another variant, the perceived contrast level is determined by locally adjusting the contrast level with a third function decreasing with the level of ambient luminosity

In a second aspect, a display device for adapting a display visibility of an image is also disclosed. The device comprises:

- means for measuring a level of ambient luminosity;
- means for modifying a low frequency portion of a signal representing an image by applying a transfer function to the low frequency portion; the transfer function depending on the level of ambient luminosity
- means for adjusting the image by combining the modified low frequency portion of the signal with a high frequency portion of the signal;

means for displaying the adjusted image.

In a third aspect a display device for adapting a display visibility of an image is also disclosed. The device comprises:

- a sensor configured to measure a level of ambient luminosity;
- at least one processor configured to modify a low frequency portion of a signal representing an image by applying a transfer function to the low frequency portion; the transfer function depending on the level of ambient luminosity, the processor being further configured to adjust the image by combining the modified low frequency portion of the signal with a high frequency portion of the signal.

In a fourth aspect, a computer program product for adapting a display visibility of an image is also disclosed. The computer program product comprises program code instructions executable by a processor for performing the method implemented in any of its variant.

In a fifth aspect, a non-transitory computer-readable storage medium storing computer-executable program instructions for adapting a display visibility of an image is also disclosed. The computer-readable storage medium comprises instructions of program code executable by at least one processor to perform the method implemented in any of its variant.

While not explicitly described, the present embodiments may be employed in any combination or sub-combination. For example, the present principles are not limited to the described variants, and any arrangement of variants and embodiments can be used. Moreover, the present principles are not limited to the described parametric contrast enhancement techniques examples and any other type of parametric contrast enhancement is compatible with the disclosed principles. The present principles are not further limited to the described continuously increasing or decreasing function and are applicable to any other continuously increasing or decreasing function. The present principles are not further limited to the described sharpening technique.

Besides, any characteristic, variant or embodiment described for a method is compatible with a device comprising means for processing the disclosed method, with a device comprising a processor configured to process the disclosed method, with a computer program product comprising program code instructions and with a non-transitory computer-readable storage medium storing program instructions.

4. BRIEF DESCRIPTION OF THE DRAWINGS

- **Figures 1** illustrates a method for adapting a display visibility of an image according to a specific and non-limiting embodiment;
- **Figure 2** illustrates an example of an adapted display visibility with an adjusted image according to a specific and non-limiting embodiment;
- **Figure 3** represents a processing device for adapting a display visibility of an image according to two specific and non-limiting embodiments;
- **Figure 4** represents an exemplary architecture of the processing device of figure 3 according to a specific and non-limiting embodiment.

It should be understood that the drawing(s) are for purposes of illustrating the concepts of the disclosure and are not necessarily the only possible configuration for illustrating the disclosure.

5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to display visibility adaptation while displaying an image in a varying illuminated environment. The present principles are applicable to images of a video sequence.

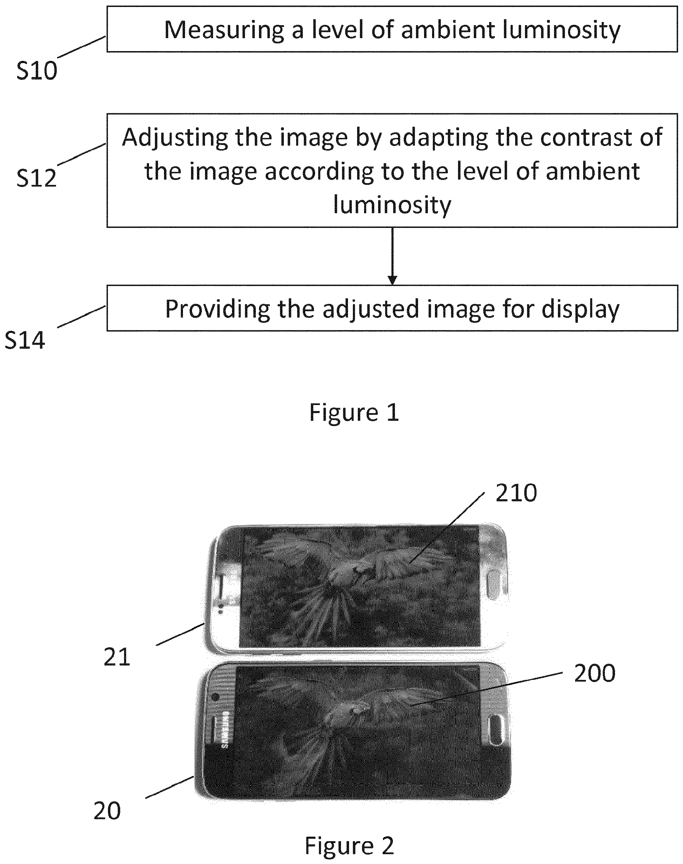

**Figure 1** illustrates a method for adapting a display visibility of an image on a display device according to a specific and non-limiting embodiment. In the step S10 a level of ambient luminosity is measured by a light meter, such as for example a light sensor of a camera. Any light sensor adapted to measure a level of ambient light is compatible with the disclosed principles. In a first variant, the light meter is embedded in the display device. The display device is for example a smartphone, a tablet, a laptop or a TV set with an embedded camera. In a second variant, the light meter is located in a separate device, located in the proximity of the display device. The level of light is for example measured in lux and is noted L(t) for reflecting its dependency over time. Typical levels of light range from full moon night (0.5 lx), indoor living (200-400 lx), and outdoor sunny (50k-100k lx).

In the step S12, an adjusted image is obtained by adapting the contrast of the image according to the measured level L(t) of ambient luminosity. In an advantageous variant, the image adjustment is performed or not performed as a function of the level of ambient luminosity (performed for high values of ambient luminosity and not performed for low values of ambient luminosity). In a non-limiting example, the contrast of the image is adapted only in case the measured level of ambient luminosity is above a given value. Indeed, in low light conditions, such as indoor or night environment, the viewing conditions are considered as good for the users, and adapting the contrast would create a risk to generate visually unpleasant and/or tiring effects. Moreover, adapting the contrast is also likely to impact the power consumption of the device and to be damageable for the battery duration. A given value is for example a value between 100 lux and 300 lux. The given value is for example a configuration parameter, adjustable by the user via a user interface. In another example, the given value is a parameter configured by the display device manufacturer. In yet another example, the given value is automatically determined by the display device according to a user profiling technique.

According to a non-limiting embodiment, the contrast is adapted by enhancing the contrast according to the measured level L(t) of ambient light. More precisely the contrast is enhanced on the adjusted image by applying a contrast enhancement technique of any type, parametrized by a contrast enhancement parameter $\mu$ which depends on the level of ambient luminosity. In other words, the luminance of the adjusted image is obtained by applying a parametric transfer function, noted "$CE_\mu$" to the luminance of the image depending on the currently measured level of ambient luminosity. The notation "$CE_\mu$" reflects that the transfer function, noted "CE" is a parametric transfer function depending on the parameter $\mu$, which itself depends on the ambient luminosity. As the level of measured ambient luminosity is varying over time, the contrast enhancement parameter $\mu$ and thus the parametric transfer function also vary over time as the level of ambient luminosity vary. For example, the parametric transfer function $CE_\mu$ is parametrized by the contrast

enhancement parameter $\mu$. In a first variant, the contrast enhancement is a linear stretching, and the transfer function is linear. The $\mu$ parameter is the shape of the transfer function. In a second variant, the contrast enhancement is a piecewise linear stretching, and the transfer function is a piece wise linear transfer function comprising successive linear curbs with different shapes. According to the second variant, the $\mu$ parameter is related to the highest shape among the different shapes of the different linear pieces of the of the piece wise linear transfer function. In yet another variant, the contrast enhancement comprises a gamma transform. In this case the $\mu$ parameter is related to the gamma. Any other variant of parametric contrast enhancement function, for which the parameter depends of the level of ambient luminosity is compatible with the disclosed principles. Advantageously, a parameter of the transfer function (the contrast enhancement parameter $\mu$) is obtained by a first function, noted $\mu=g(L(t))$, where "t" represent the time and $L(t)$ a level of ambient luminosity at time t. The first function $g(L(t))$ is strictly and continuously increasing with the level luminosity. Any parametric type of strictly and continuously increasing function including but not limited to linear, logarithmic and polynomial are compatible with the disclosed principles. Different parametric types of strictly and continuously increasing functions differently impact the a same variation of ambient light because of their different shaping (linear, log, polynomial). Advantageously, the parametric type of increasing function is determined according to the display screen characteristics, and is for example performed through user tests.

In the step S14, the display visibility of the image is adapted by sending the adjusted image for display on a display device.

According to a first optional and non-limiting embodiment, the image (noted I) is separated into a high-frequency component $I_h$ and a low frequency component $I_l$, which is equal to $I - I_h$. In other words, a signal represented the image is separated into a low frequency part or portion and a high frequency part of portion. The separation may be performed by filtering the signal using many different types of filters including, but not limited to, an iterated median filter, edge preserving filters, bilateral filter, and a rolling guidance filter. Advantageously, in this optional variant, only the low frequency component $I_l$ is modified by applying the transfer function depending on the level of ambient luminosity (as described above), the modified low frequency component being further recombined with the high frequency component for obtaining the adjusted image. Enhancing the contrast only on the low frequency component is advantageous as the low frequency component has a higher signal dynamic than the high frequency component. Typically, in the high frequency component, an edge is spread only on a few values, and further spreading these few values (by applying the contrast enhancement to them) are more likely to create undesired artefacts. Without loss of generality, recombining the two components corresponds to adding both components, representing the inverse operation of the separation. More formally, the adjusted image $I_a$ according to the second optional embodiment can be written as equation (1):

$$I_a=CE_\mu{}^*(I\text{-}I_h) \; ; \; \mu=g(L(t) \;\; (1)$$

According to a second optional and non-limiting embodiment, the image is also separated into a high $I_h$ and a low $I_l$ frequency components as for the first embodiment. In other words, a signal represented the image is separated into a low frequency part or portion and a high frequency part of portion, and the high frequency portion of the signal (component $I_h$ of the image) is amplified to enhance edges and sharpen the image prior being recombined with the modified low frequency portion of the signal (component of the image as described in the first embodiment). More precisely, adjusting the image further comprises amplifying the high frequency portion of the signal (component $I_h$) of the image with an amplification coefficient $\alpha$ depending on the measured level $L(t)$ of ambient luminosity at time t. More formally, the adjusted image $I_a$ according to the second optional embodiment can be written as equation (2):

$$I_a=CE_\mu{}^*(I\text{-}I_h)+ \alpha{}^*I_h \;\; (2)$$

**Global Sharpening**

In a first variant of the second optional embodiment (called global sharpening), the amplification coefficient $\alpha$ is determined globally for the image by a second function of the measured level $L(t)$ of ambient luminosity ($\alpha=g'(L(t))$), the second function $g'$ increasing with the measured level of ambient luminosity. The second function may be of any parametric type including but not limited to linear, polynomial, sine and exponential functions. In a first example, the first and the second functions are a same function. In another example, they are different functions. The type of function depends on the display characteristic such as its gamut or its sensitivity, and is advantageously tuned according to user tests. In global sharpening variant, the amplification coefficient is a global amplification coefficient and does not spatially vary: the global coefficient has the same value for all the pixels of the image, and only depends on the measured level $L(t)$ of ambient luminosity.

## Local Sharpening

In a second variant of the second optional embodiment (called local sharpening), the amplification coefficient $\alpha$ is determined locally in the image depending on both the color values of elements of the image and the measured level of ambient light. The term "element" refers to any part of the image, associated with given color characteristics represented for example by at least three color component values. For example, an element corresponds to a pixel in an image. In another example, the element corresponds to a set of pixels in an image with similar color component values. In another example, an element corresponds to a patch on which the contrast has been extracted. For the sake of clarity and without limitation, an element is considered having spatial coordinates (x,y). Depending on what an element represents, the spatial coordinates are for example integers (representing a pixel coordinates), or sets of integers (representing for example sets of pixels). Considering $I_a$(x,y) representing the adjusted image value at each point / element (x,y), equation (2) is rewritten as:

$$I_a(x,y) = CE_\mu * (I(x,y) - I_h(x,y)) + \alpha(x,y) * I_h(x,y) \quad (2)$$

For the sake of clarity, the values $I_a$(x,y),(I(x,y) and $I_h$(x,y) represent a component value of an area corresponding to the spatial coordinates (x,y) in the corresponding image. Without loss of generality a component value may be a luminance value or a triplet of Red, Green, Blue colour component values. According to the local sharpening variant, the amplification coefficient is a local amplification coefficient, varying locally in the image depending on the local colour value of the image and further depending on the measured level of light. The contrast is known as the difference in luminance or in colour that makes an object (or its representation in an image) distinguishable. In visual perception of the real world, contrast is generally determined by the difference in the colour and the brightness of the object and other objects with a same field of view. Advantageously, a perceived contrast is determined for the image, the perceived contrast being defined as a mixture between the contrast of the image and the measured level of ambient light, the higher the level of ambient light, the lesser the perceived contrast. The perceived contrast, contrary to the contrast is a metric representing how objects are distinguishable under a given ambient lighting condition.

Determining a perceived contrast $P_t$(**x,y**) of an image **I**(**x,y**) comprises extracting a contrast $C_t$(**x,y**) of the image. For example, a root mean square (RMS) contrast is extracted. In a nutshell, it amounts to compute the standard deviation of the luminance signal over patches (rectangles) of a given size. Depending on the size (and the number) of patches the accuracy of the contrast and the required computational resources for extracting it vary. Any other contrast metric including but not limited to the Weber contrast or the Michelson contrast and their corresponding extraction techniques are compatible with the disclosed principles. Computing the RMS contrast is advantageous as it is not computational intensive and is compatible with the computing resources available on mobile devices such as smartphones or tablets.

Determining the perceived contrast $P_t$(**x,y**) of the image **I**(**x,y**) further comprises locally adjusting the extracted contrast level with a third function decreasing with the measured level of luminosity. For example, the extracted local contrast level $C_t$(**x,y**) is multiplied by the third function comprising an exponential function and a scale parameter a, according to the following formula:

$$P_t(x,y) = C_t(x,y) * \exp(-L(t)/2\sigma^2) \quad (3)$$

The scale parameter $\sigma$ determines the cut between the level of ambient luminosity and the perceived contrast. It depends on the display device characteristic and is advantageously tuned through user tests.

According to the local sharpening variant, the local coefficient $\alpha$(**x,y**) of an element in the image is obtained by a fourth function f of the perceived contrast level $P_t$(**x,y**) of the element in the image, the fourth function f decreasing with the perceived contrast level $P_t$. ($\alpha$(**x,y**)=f($P_t$(**x,y**))). As for the first embodiment, the fourth function may be of any parametric type including but not limited to linear, polynomial, cosine and exponential functions.

Unsharp masking is an image sharpening technique. The "unsharp" of the name derives from the fact that the technique uses a blurred (or unsharp), negative image to create a mask of the original image. The unsharp mask is then combined with the positive (original) image, creating an image that is less blurry than the original. The resulting image, although clearer is generally a less accurate representation of the image's subject. The unsharp mask is generally a linear or nonlinear filter that amplifies the high-frequency component of an image. The local and the global sharpening variants advantageously adapt the unsharp masking technique by determining a perceived contrast level according to a level of ambient light, and amplifying the high frequency component of an image depending on the perceived contrast to increase the level of sharpening as the level of ambient light increases.

The local sharpening variant is further advantageous, as the sharpening is concentrated on the most contrasted areas, representing visually meaningful area, letting other more homogenous areas unchanged (or less sharpened).

The local sharpening variant limits the drawback of strong sharpening in homogenous areas (creating noise amplification and/or visually unpleasant effects).

According to any variant described above the adjusted image, corresponding to the sharpened image is provided for display on the display device.

In an advantageous variant, the operations of the combinations or recombinations (addition/subtraction and multiplication) on images are performed in a Generalized Linear System (GLS) as proposed in "A generalized unsharp masking algorithm" by Deng (in IEEE Transactions on Image Processing, 2011) so as to remain in the coding domain of the image.

**Figure 2** illustrates an example of an adapted display visibility with an adjusted image according to a specific and non-limiting embodiment. Figures 2 shows a display device 21, 21 under different lighting conditions: the display device 20 under normal lighting conditions such as indoor conditions, and the display device 21 under brighter conditions such as outdoor sunny conditions. An image 200 is displayed by the display device 20 under normal lighting conditions, wherein the contrast is not adapted (because the measured level of ambient light is under a given value). Figures 2 further shows an adjusted image 210 displayed by the display device 21 under brighter lighting conditions, wherein the contrast of the image 200 has been adapted according to a variant of the disclosed principles, illustrating that the displayed bird is still clearly distinguishable despite an increase of the ambient light level. Both display devices 20, 21 of Figure 2 illustrate the same display device under different lighting conditions.

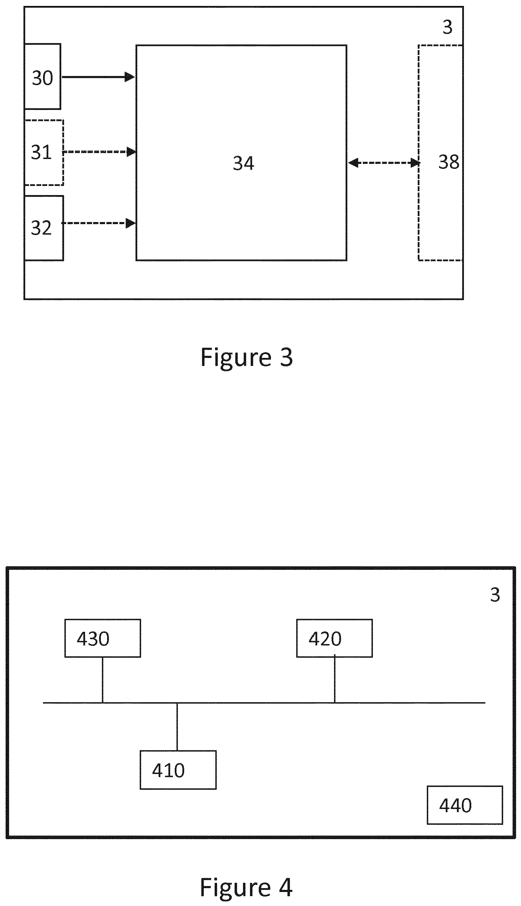

**Figure 3** depicts a processing device 3 for adapting a display visibility of an image. According to a specific and non-limitative embodiment of the disclosed principles, the processing device 3 comprises an input 30 configured to receive the image which is obtained from a source. According to different embodiments of the disclosed principles, the source belongs to a set comprising:

- a local memory, e.g. a video memory, a RAM, a flash memory, a SSD, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface, a Bluetooth interface or a cellular network interface);

The processing device 3 further comprises an optional input 31 to receive configuration data from a user. Configuration data are generated by a user via a user interface in order to configure the processing device 3. According to different embodiments of the disclosed principles, the user interface belongs to a set comprising:

- a touch screen and its accompanying controller based firmware to generate configuration data;
- a keyboard;
- a network interface wherein the user interface is displayed on a remote device and the configuration data are received from the network interface.

More generally any user interface allowing to provide configuration data is compatible with disclosed principles.

The processing device 3 further comprises a sensor 32, for example a light detector, configured to receive and measure a level of ambient luminosity from an ambient environment. The sensor if for example the light detector of the camera embedded in a smartphone. Any light detector capable to detect and measure an amount of ambient luminosity is compatible with the disclosed principles.

The inputs 30 and 31 and the light detector 32 are linked to a processing module 34 configured to adjust the image by adapting the contrast of the image according to the level of ambient luminosity. The processing module 34 is further configured to adapt the display visibility of the image by sending the adjusted image to a display mean 38.

According to different embodiments of the disclosed principles, the display mean 38 belongs to a set comprising:

- a LCD display screen;
- a LED display screen;
- an OLED display surface.

More generally any display mean allowing to display an adjusted image, is compatible with the disclosed principles.

**Figure 4** represents an exemplary architecture of the processing device 3 according to a specific and non-limiting embodiment, where the processing device 3 is configured to adapt a display visibility of an image. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limiting embodiment, the processing device 3 further comprises a computer program stored in the memory 420. The computer program comprises instructions which, when executed by the processing device 3, in particular by the processor 410, make the processing device 3 carry out the processing method described with reference to figure 2. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).

According to exemplary and non-limiting embodiments, the processing device 3 is a display device to be used in a bright environment (possibly outdoor but not limited to out-door environments), which belongs to a set comprising:

- a smartphone;
- a tablet;
- a tablet computer;
- a laptop computer;
- a see-through display device;
- a desktop computer display;
- a TV.

**Claims**

1. A method for adapting a display visibility of an image, the method comprising:

   - measuring (S10) a level of ambient luminosity;
   - modifying a low frequency portion of a signal representing the image by applying a transfer function to the low frequency portion; the transfer function depending on the level of ambient luminosity;
   - adjusting (S12) the image by combining the modified low frequency portion of the signal with a high frequency portion of the signal;
   - adapting the display visibility of the image by providing (S14) the adjusted image for display on a display device.

2. The method according to claim 1, wherein the image adjustment is performed or not performed as a function of the level of ambient luminosity.

3. The method according to claim 1, wherein the high frequency portion is amplified with a coefficient depending on the level of ambient luminosity, prior to be combined with the modified low frequency portion.

4. The method according to claim 3, wherein a parameter of the transfer function is obtained by a first function increasing with the level of ambient luminosity.

5. The method according to any of claims 3 to 4, wherein the coefficient is obtained by a second function increasing with the level of ambient luminosity.

6. The method according to any of claims 3 to 4, wherein the coefficient is obtained by a fourth function decreasing with a perceived contrast level, the perceived contrast level representing a combination of a contrast level of the image and the level of ambient luminosity.

7. The method according to claim 6, wherein the perceived contrast level is determined by locally adjusting the contrast level with a third function decreasing with the level of ambient luminosity.

8. A display device for adapting a display visibility of an image, the device comprising:

   - means for measuring (32) a level of ambient luminosity;
   - means for modifying a low frequency portion of a signal representing the image by applying a transfer function to the low frequency portion; the transfer function depending on the level of ambient luminosity;
   - means for adjusting (34) the image by combining the modified low frequency portion of the signal with a high frequency portion of the signal ;
- means (38) for displaying the adjusted image.

9. The device according to claim 8 wherein the image adjustment is performed or not performed as a function of the level of ambient luminosity.

10. The device according to claim 8, wherein the high frequency portion is amplified with a coefficient depending on the level of ambient luminosity, prior to be combined with the modified low frequency portion.

11. The device according to claim 8, wherein a parameter of the transfer function is obtained by a first function increasing with the level of ambient luminosity.

12. The device according to any of claims 10 to 11, wherein the coefficient is obtained by a second function increasing with the level of ambient luminosity.

13. The device according to any of claims 10 to 11, wherein the coefficient is obtained by a fourth function decreasing with a perceived contrast level, the perceived contrast level representing a combination of a contrast level of the image and the level of ambient luminosity.

14. The device according to claim 13, wherein the perceived contrast level is determined by locally adjusting the contrast level with a third function decreasing with the level of ambient luminosity.

15. A computer program product for adapting a display visibility of an image, the computer program product comprising program code instructions executable by a processor for:

- measuring (S10) a level of ambient luminosity;
- modifying a low frequency portion of a signal representing the image by applying a transfer function to the low frequency portion; the transfer function depending on the level of ambient luminosity;
- adjusting (S12) the image by combining the modified low frequency portion of the signal with a high frequency portion of the signal ;
- adapting the display visibility of the image by providing (S14) the adjusted image for display on a display device.

Measuring a level of ambient luminosity

S10

Adjusting the image by adapting the contrast of the image according to the level of ambient luminosity

S12

Providing the adjusted image for display

S14

Figure 1

210

21

200

20

Figure 2

Figure 3

Figure 4

Europäisches
Patentamt

European
Patent Office

Office européen
des brevets

# EUROPEAN SEARCH REPORT

Application Number

EP 18 17 8821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/167751 A1 (KEROFSKY LOUIS J [US]) 2 July 2009 (2009-07-02) * paragraph [0206] - paragraph [0226]; figures 8-11 * * paragraph [0247] - paragraph [0260]; figures 23-28 * * paragraph [0283] * * paragraph [0339] * * paragraph [0393] - paragraph [0398]; figure 58 * | 1-15 | INV. G09G3/20 |
| X | US 2005/212824 A1 (MARCINKIEWICZ WALTER M [US] ET AL) 29 September 2005 (2005-09-29) * paragraph [0017] - paragraph [0038]; figures 1-6 * | 1-15 | |
| Y | EP 3 038 100 A1 (APPLE INC [US]) 29 June 2016 (2016-06-29) * paragraph [0011] - paragraph [0013]; figure 1 * * paragraph [0020] - paragraph [0026]; figure 5 * * paragraph [0045] - paragraph [0087]; figures 6, 8, 9 * | 1-15 | |
| Y | US 2014/153793 A1 (GOHARRIZI AZADEH YAZDANPANAH [CA] ET AL) 5 June 2014 (2014-06-05) * paragraph [0003] - paragraph [0006] * * paragraph [0027] - paragraph [0039]; figures 1-5 * | 1-15 | |

TECHNICAL FIELDS SEARCHED (IPC)

G09G

The present search report has been drawn up for all claims

| Place of search | Date of completion of the search | Examiner |
|---|---|---|
| Munich | 16 August 2018 | Morris, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 8821

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2018

| Patent document cited in search report | | Publication date | Patent family member(s) | | Publication date |
|---|---|---|---|---|---|
| US 2009167751 | A1 | 02-07-2009 | CN | 101911172 A | 08-12-2010 |
| | | | EP | 2232469 A1 | 29-09-2010 |
| | | | JP | 5411848 B2 | 12-02-2014 |
| | | | JP | 2010537223 A | 02-12-2010 |
| | | | US | 2009167751 A1 | 02-07-2009 |
| | | | WO | 2009082021 A1 | 02-07-2009 |
| US 2005212824 | A1 | 29-09-2005 | CN | 1926605 A | 07-03-2007 |
| | | | EP | 1728239 A1 | 06-12-2006 |
| | | | JP | 2007535695 A | 06-12-2007 |
| | | | US | 2005212824 A1 | 29-09-2005 |
| | | | WO | 2005104081 A1 | 03-11-2005 |
| EP 3038100 | A1 | 29-06-2016 | AU | 2015101593 A4 | 03-12-2015 |
| | | | AU | 2015249150 B1 | 09-06-2016 |
| | | | CN | 104809975 A | 29-07-2015 |
| | | | CN | 204596390 U | 26-08-2015 |
| | | | EP | 3038100 A1 | 29-06-2016 |
| | | | JP | 5958945 B2 | 02-08-2016 |
| | | | JP | 2016118756 A | 30-06-2016 |
| | | | KR | 20160076957 A | 01-07-2016 |
| | | | TW | 201610958 A | 16-03-2016 |
| | | | US | 2016180780 A1 | 23-06-2016 |
| | | | US | 2017103728 A1 | 13-04-2017 |
| US 2014153793 | A1 | 05-06-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DENG.** A generalized unsharp masking algorithm. *IEEE Transactions on Image Processing,* 2011